(19) Europäisches Patentamt
European Patent Office
Office européen des brevets

(11) **EP 2 671 910 A1**

(12) **EUROPEAN PATENT APPLICATION**
published in accordance with Art. 153(4) EPC

(43) Date of publication:
**11.12.2013 Bulletin 2013/50**

(21) Application number: **12742279.8**

(22) Date of filing: **02.02.2012**

(51) Int Cl.:
*C08J 9/00* (2006.01)     *H01M 2/16* (2006.01)

(86) International application number:
**PCT/JP2012/052428**

(87) International publication number:
**WO 2012/105661 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2011 JP 2011021317**

(71) Applicant: **Toray Industries, Inc.**
**Tokyo, 103-8666 (JP)**

(72) Inventors:
• **KUMA, Takuya**
**Otsu-shi**
**Shiga 520-8558 (JP)**

• **FUJIMOTO, Soichi**
**Otsu-shi**
**Shiga 520-8558 (JP)**
• **OHKURA, Masatoshi**
**Otsu-shi**
**Shiga 520-8558 (JP)**

(74) Representative: **Webster, Jeremy Mark**
**Mewburn Ellis LLP**
**33 Gutter Lane**
**London**
**EC2V 8AS (GB)**

(54) **POROUS POLYPROPYLENE FILM, SEPARATOR FOR ELECTRICITY STORAGE DEVICE, AND ELECTRICITY STORAGE DEVICE**

(57)     Provided is a porous polypropylene film that is safe and has low air permeation resistance. A porous polypropylene film of the present invention includes a polypropylene resin and a β-crystal nucleating agent, in which a temperature at which a heat shrinkage rate of a dimension in a width direction of the film is 5% is 130 to 200 °C, air permeation resistance is 50 to 500 sec/100 ml, porosity is 35 to 70%, and when porosity is ε and air permeation resistance is G, a relation of the both satisfies the following expression (1):

$$G + 15 \times \varepsilon \leq 1{,}200 \qquad\qquad (1).$$

EP 2 671 910 A1

**Description**

Field

The present invention relates to a porous polypropylene film that is safe and has low air permeation resistance, and to a separator for electricity storage devices in which the porous polypropylene film is used, and an electricity storage device.

Background

Polypropylene films have been used in various uses such as of industrial materials, packaging materials, optical materials, electronic materials and the like for their excellent mechanical characteristics, heat characteristics, electric characteristics, and optical characteristics. Porous polypropylene films, which are prepared by providing gaps in the polypropylene films to make them porous, also have excellent characteristics such as permeability and low densities and the like in addition to the characteristics of polypropylene films, and thus the porous polypropylene films have been investigated to be applied for a variety of uses such as separators for batteries and electrolytic capacitors, various types of separation membranes, clothes, moisture-permeable waterproof membranes for medical uses, reflectors of flat panel displays, thermal transfer printing sheets and the like.

A variety of methods to make polypropylene films porous have been developed. Such methods can be generally classified into wet methods and dry methods. In wet methods, using polypropylene as a matrix resin, adding and mixing a material to be extracted after sheet formation, and extracting only an additive by using a good solvent for the material to be extracted to generate gaps in the matrix. A variety of wet methods have been developed (see, for example, Patent Literature 1). When utilizing the methods, resin viscosity at the time of extrusion can be reduced because of a solvent contained, and membranes can be produced with materials having high molecular weight, and thereby mechanical properties such as piercing strength and breaking strength are improved; however, an extraction step of the solvent takes time and requires labor, and thus productivity is not easily improved.

On the other hand, for example, the following method has been developed as a dry method (which is referred to as a lamellar stretching method). In the lamellar stretching method, when a melt extrusion is performed with a low-temperature extrusion and a high draft ratio, a lamellar structure in the sheeted and prestretched film is controlled, and is uniaxially stretched in the longitudinal direction, and thereby cleavage is occurred at the lamellar interface to form gaps (see, for example, Patent Literature 2). Because the method does not require an extraction step, it is productive compared to wet methods; however, because of the uniaxial stretching, the product is hard to be widened and a stretching speed should be lowered, and thus further improvement on the productivity has been difficult. In addition, improvement of mechanical strength in the direction orthogonally crossed to the stretching direction has also been difficult.

As dry methods for producing porous polypropylene films by biaxial stretching, a number of methods, which are referred to as β-crystal methods, have also been developed. In the methods, gaps are formed in films by utilizing differences of crystal densities between α-type crystals (α-crystals) and β-type crystals (β-crystals), which are crystal polymorphs of polypropylene, and crystal transformations (see, for example, Patent Literatures 3 to 5). By employing the methods, porous films having excellent air permeability can be formed; however, because sometimes they are stretched also in the width directions, which enhances heat shrinkage in the width directions of porous polypropylene films, and thus the methods still need to be improved. In addition, when the β-crystal methods are employed, through holes become difficult to be uniformly opened. If porosity is lowered for safety, air permeation resistances are increased; on the other hand, if additives such as plasticizers are added to open the holes uniformly, although air permeation resistances are decreased, porosity is increased and safety is lowered. Therefore, safety and low-resistance have been difficult to be satisfied simultaneously.

Citation List

Patent Literature

Patent Literature 1: Japanese Patent Application Laid-open No. 55-131028
Patent Literature 2: Japanese Examined Patent Application Laid-open No. 55-32531
Patent Literature 3: Japanese Patent Application Laid-open No. 63-199742
Patent Literature 4: Japanese Patent Application Laid-open No. 6-100720
Patent Literature 5: Japanese Patent Application Laid-open No. 9-255804

Summary

Technical Problem

The present invention has been completed in view of above, and provides a porous polypropylene film that is safe and has low air permeation resistance, a separator for electricity storage devices, and an electricity storage device.

Solution to Problem

To solve the problem described above and achieve the object, a porous polypropylene film according to the present invention includes a polypropylene resin and a β-crystal nucleating agent, wherein a temperature at which a heat shrinkage rate of a dimension in a width direction of the film is 5% is 130 to 200 °C, air permeation resistance is 50 to 500 sec/100 ml, porosity is 35 to 70%, and when porosity is ε and air permeation resistance is G, a relation of the both satisfies the following expression (1) :

$$G+15×ε \leq 1,200 \hspace{4cm} (1).$$

Advantageous Effects of Invention

A porous polypropylene film of the present invention is safe and has excellent air permeability, and thus it exhibits excellent ion conductivity suitable for separators for electricity storage devices, and can suitably be used as a safe separator.

Description of Embodiments

Hereinafter, embodiments of the present invention will be described. A porous polypropylene film of the present invention contains a polypropylene resin and a β-crystal nucleating agent. The polypropylene resin contained in the porous polypropylene film of the present invention preferably has a melt flow rate (hereinafter, abbreviated as MFR. The measuring condition is 230 °C, 2.16 kg) that is from 2 g/10 min to 30 g/10 min, and preferably be an isotactic polypropylene resin. When MFR is less than 2 g/10 min, melt viscosity of a resin is increased, and high-precision filtration becomes difficult to perform, and thus a film-quality may be lowered. When MFR is over 30 g/10 min, a molecular weight becomes too small, then a film tends to be torn at the time of stretch, and thus productivity may be lowered. More preferably, MFR is from 3 g/10 min to 20 g/10 min.

When an isotactic polypropylene resin is utilized, the isotactic index is preferably 90 to 99.9%. When the isotactic index is less than 90%, crystallinity of the resin is lowered, and thus high-air permeability may hardly be achieved.

As a polypropylene resin used in the present invention, not only a homo-polypropylene resin, but also a resin in which 5 parts or less by mass, preferably 2.5 parts by mass of an ethylene component or an α-olefin component such as butene, hexene, octene or the like is copolymerized with 100 parts by mass of polypropylene can be used from the point of view of stability, membrane formability, and property uniformity in a membrane producing step. Note that any of random copolymerization and block copolymerization can be utilized to introduce a comonomer (copolymerization component) into polypropylene.

In a polypropylene resin used in the present invention, high molecular weight polypropylene whose MFR is 0.1 g/10 min or more, but less than 2 g/10 min is preferably blended to the above-described polypropylene resin whose MFR is from 2 g/10 min to 30 g/10 min. A preferable blend ratio is 0.5 to 30 parts by mass of a high molecular weight polypropylene resin to 100 parts by mass of the polypropylene resin. By adding high molecular weight polypropylene, safety and membrane productivity of a porous polypropylene film of the present invention can be improved. As high molecular weight polypropylene, for example, the polypropylene resin D101 manufactured by Sumitomo Chemical Company, Limited, and the polypropylene resins E111G, B241, and E105GM manufactured by Prime Polymer Co., Ltd. and the like can be used.

In a polypropylene resin used in the present invention, low melting point polypropylene whose melting point Tm is 130 to 150 °C is preferably blended to the above-described polypropylene resin whose MFR is from 2 g/10 min to 30 g/10 min. A preferable blend ratio is 0.5 to 30 parts by mass of a low melting point polypropylene resin to 100 parts by mass of the polypropylene resin. By adding low melting point polypropylene, safety and membrane productivity of a porous polypropylene film of the present invention can be improved. As low melting point polypropylene, for example, the polypropylene resins S131 and FS3611 manufactured by Sumitomo Chemical Company, Limited can be used.

In a polypropylene resin used in the present invention, high melt strength polypropylene is preferably blended to the above-described polypropylene resin whose MFR is from 2 g/10 min to 30 g/10 min. A preferable blend ratio is 0.5 to 30 parts by mass of a high melt strength polypropylene resin to 100 parts by mass of the polypropylene resin. The high melt strength polypropylene is a polypropylene resin in which a high molecular weight component or a component having a branched structure is mixed into a polypropylene resin, or a long-chain branched structure is copolymerized with polypropylene to enhance a tensile strength in a melting status. By adding high melt strength polypropylene, safety and membrane productivity of a porous polypropylene film of the present invention can be improved. As high melt strength polypropylene, a polypropylene resin copolymerized with a long-chain branched component can preferably be used, and for example, the polypropylene resins PF814, PF633, and PF611 manufactured by Basell Company, the polypropylene resin WB130HMS manufactured by Borealis Compounds, LLC, and the polypropylene resins D114 and D206 manufactured by the Dow Chemical Company can be used.

In a polypropylene resin used in the present invention, an ethylene/α-olefin copolymer is preferably blended to the above-described polypropylene resin whose MFR is 2 g/10 min or more/10 min or less, and a blend ratio is 1 to 25 parts by mass of an ethylene/α-olefin copolymer to 100 parts by mass of the polypropylene resin. By adding an ethylene/α-olefin copolymer, air permeability of a porous polypropylene film of the present invention can be improved by increase of gap formation efficiency, uniformed opening of holes, and enlargement of pore sizes at the time of biaxial stretching. Examples of ethylene/α-olefin copolymer include linear low density polyethylene and ultra low density polyethylene. Of these, a copolymer polyethylene resin (copolymer PE resin) in which ethylene and 1-octene are copolymerized, and whose melting point is 60 to 90 °C can preferably be used. Examples of the copolymer polyethylene include commercially available resins, such as "Engage (registered trademark)" (types: 8411, 8452, 8100 and the like) manufactured by the Dow Chemical Company.

As a polypropylene resin of the present invention, a polypropylene resin in which the above-described high molecular weight polypropylene resin and ethylene/α-olefin copolymer are blended to the above-described polypropylene resin whose MFR is 2 g/10 min or more, but is 30 g/10 min or less can preferably be used. When a high molecular weight polypropylene resin is blended to a polypropylene resin at the above-mentioned ratio, safety and membrane productivity of a porous polypropylene film can be improved, and when an ethylene/α-olefin copolymer is additionally blended, porosity and an average size of a through hole described below can easily be controlled in a preferable range. A blend ratio of an ethylene/α-olefin copolymer is preferably 1 to 10 parts by mass to 100 parts by mass of a composition containing a polypropylene resin. From the point of view of mechanical characteristics of a porous polypropylene film of the present invention, a ratio of an ethylene/α-olefin copolymer is more preferably 1 to 7 parts by mass, and particularly preferably 1 to 2.5 parts by mass.

A polypropylene resin composing a porous polypropylene film of the present invention contains preferably less than 2% by mass and more preferably less than 1.5% by mass of cold xylene soluble (CXS) component. When the CXS is 2% by mass or more, low molecular weight components are increased and thus mechanical properties of a porous polypropylene film may be worsened. To make the percent by mass of the CXS less than 2, a method in which a polymerization is performed with a polymerization catalyst system that decreases the CXS, a method including a washing step following a polymerization to remove an atactic polymer, or the like method can be employed.

A polypropylene resin composing a porous polypropylene film of the present invention contains preferably 0.01% by mass or less, more preferably 0.005% by mass or less, still more preferably 0.001% by mass or less of hydrotalcite. Hydrotalcite may inhibit β-crystal formation, and when an amount of hydrotalcite is over 0.01% by mass, air permeability of a porous polypropylene film may be lowered.

A polypropylene resin composing a porous polypropylene film of the present invention contains preferably 0.01% by mass or less of ash. When an amount of ash is over 0.01% by mass, it may lower withstand voltage and battery life when applying to a separator for electricity storage devices.

Hereinafter, polypropylene resins composing porous polypropylene films, for example, porous polypropylene film materials in which the below-mentioned ethylene/α-olefin copolymer, β-crystal nucleating agent, and various additives are added to polypropylene resins consisting of single components, mixtures of a plurality of polypropylene resins or the like are collectively referred to as a polypropylene composition.

As additives added to a polypropylene resin of the present invention, antioxidants, thermal stabilizers, neutralizing agents, antistatic agents, and lubricants consisting of inorganic or organic particles, as well as anti-blocking agents, fillers, incompatible polymers and the like can be contained, as long as effects of the present invention are not decreased. In particular, antioxidants are preferably added to suppress oxidation degradations caused by thermal histories of polypropylene compositions, and an addition amount of an antioxidant is preferably 2 parts by mass or less, more preferably 1 part by mass or less, and still more preferably 0.5 part by mass or less to 100 parts by mass of a polypropylene resin (a mixture, when a mixture of polypropylene resins is used).

A porous polypropylene film of the present invention has a hole through both surfaces of a film, and is air permeable (hereinafter, referred to as a through hole). The hole is preferably formed in a film, for example, by biaxial stretching. Examples of specific methods include a β-crystal method. According to the method, high productivity, consistent properties, and thin-film formations can be achieved.

To form a through hole in a film by utilizing a β-crystal method, β-crystal forming ability of a polypropylene composition is preferably 60% or more. When β-crystal forming ability is less than 60%, because an amount of β-crystals is decreased at the time of film manufacturing, the number of gaps that are formed in a film by utilizing a transition to α-crystals becomes little, and thus only low permeable films may be obtained. On the other hand, although an upper limit of β-crystal forming ability is not particularly limited, to make it over 99.9%, a large amount of the below-mentioned β-crystal nucleating agent should be added, and tacticity of a polypropylene resin used should be made as extremely high, and thus stability of a film formation is worsened, and industrial value is lowered. Industrially, β-crystal forming ability is preferably 65 to 99.9%, and particularly preferably 70 to 95%. In addition, β-crystal forming ability of a porous polypropylene film is preferably 60% or more.

To control β-crystal forming ability to 60% or more, it is preferable to use a polypropylene resin having a higher isotactic index and a crystal nucleating agent as an additive, which is referred to as a β-crystal nucleating agent, and when the β-crystal nucleating agent is added to a polypropylene resin, β-crystals are selectively formed. Examples of a β-crystal nucleating agent include a variety of pigment compounds, amide compounds and the like. As an amide compound, for example, N,N'-dicyclohexyl-2,6-naphthalene dicarboxamide, N,N'-dicyclopentyl-2,6-naphthalene dicarboxamide, N,N'-dicyclooctyl-2,6-naphthalene dicarboxamide, N,N'-dicyclododecyl-2,6-naphthalene dicarboxamide, N, N'-dicyclohexyl-2,7-naphthalene dicarboxamide, N,N'-dicyclohexyl-4,4'-biphenyl-dicarboxamide, N,N'-dicyclopentyl-4,4'-biphenyl-dicarboxamide, N,N'-dicyclooctyl-4,4'-biphenyl-dicarboxamide, N,N'-dicyclododecyl-4,4'-biphenyl-dicarboxamide, N,N'-dicyclohexyl-2,2'-biphenyl-dicarboxamide, N,N'-diphenylhexane diamide, N,N'-dicyclohexyl-terephthalamide, N,N'-dicyclohexane carbonyl-p-phenylenediamine, N,N'-dibenzoyl-1,5-diaminonaphthalene, N,N'-dibenzoyl-1,4-diaminocyclohexane, N,N'-dicyclohexane carbonyl-1,4-diaminocyclohexane, N-cyclohexyl-4-(N-cyclohexane carbonyl amino)benzamide, N-phenyl-5-(N-benzoylamino)pentanamide, a tetraoxaspiro compound such as 3,9-bis[4-(N-cyclohexylcarbamoyl)phenyl]-2,4,8,10-tetraoxaspiro[5.5]undecane and the like can preferably be used, and in particular, amide compounds disclosed in Japanese Patent Application Laid-open No. 5-310665 can preferably be used. Two or more of β-crystal nucleating agents can be mixed to use.

An addition amount of a β-crystal nucleating agent is preferably 0.05 to 0.5 part by mass, and more preferably 0.1 to 0.3 part by mass to 100 parts by mass of a polypropylene resin (a mixture, when polypropylene resins are mixed to use). When the addition amount is less than 0.05 part by mass, β-crystal is not sufficiently formed, and air permeability of a porous polypropylene film may be lowered. When the addition amount is over 0.5 part by mass, large voids are formed, and safety may be lowered when applied to a separator for electricity storage devices.

When a porous polypropylene film of the present inventions is used as a separator, porosity of a porous polypropylene film is 35 to 70% from the point of view to satisfy both ion conductivity and safety. When porosity is less than 35%, electric resistance may be increased when used as a separator. On the other hand, when porosity is over 70%, safety may be decreased when used for a separator of a large capacity battery, which is used in electric vehicles and the like. From the point of view to satisfy both excellent battery properties and high safety, porosity of a film is more preferably 40 to 65%, and particularly preferably 45 to 60%.

Air permeation resistance of a porous polypropylene film of the present invention is 50 to 500 sec/100 ml, more preferably 80 to 300 sec/100 ml, and still more preferably 80 to 250 sec/100 ml. When air permeation resistance is less than 50 seconds, mechanical strength of a film may be decreased and handling becomes difficult, and safety may be decreased when used for a separator. When air permeation resistance is over 500 seconds, output properties may be decreased when used for a separator.

Moreover, in a porous polypropylene film of the present invention, from the point of view to satisfy both safety and output properties, when porosity is ε (%) and air permeation resistance is G (sec/100 ml), a relation of the both satisfies the following expression (1):

$$G + 15 \times \varepsilon \leq 1,200 \qquad\qquad (1)$$

A value of the left side of the expression (1), i.e., a value of the [G+15×ε] is more preferably 1,150 or less, and still more preferably 1,100 or less. If a value of the left side of the expression (1) is over 1,200, porosity becomes too high when air permeation resistance is low, and safety may be lowered. On the other hand, when porosity is low, air permeation resistance becomes high, and resistance of a separator becomes large to lower output properties. From the point of view of safety and output properties, although a value of the left side of the expression (1) is preferably smaller, a lower limit is practically about 600 in this manufacturing method. The above expression (1) has been specifically induced and determined from properties of films obtained in each of Examples and relations between G and ε.

When controlling air permeation resistance by a β-crystal method, air permeation resistance has been controlled usually by altering running conditions, such as a longitudinal stretching ratio, a longitudinal stretching temperature, transverse stretching speed and the like. However, there is a trade-off between the control of air permeation resistance by the above-mentioned running conditions and porosity. That is, when air permeation resistance is decreased, porosity tends to be high, and when porosity is low, air permeation resistance tends to be increased. Accordingly, in films that have excellent output properties and low air permeation resistance, porosity is high, and safety may be lowered. In the present invention, by setting a condition of a heat treatment following transverse stretching as the below-mentioned specific condition, a porous polypropylene film having low air permeation resistance and low porosity can be obtained, and thereby both safety and output properties can be satisfied. A condition of a heat treatment will be described below.

In the β-crystal method, holes are formed by transverse stretching in a tenter following longitudinal stretching, and thereby porous polypropylene films can be obtained. A transverse stretching step in a tenter can be divided into three steps, that is, a preheat step, a transverse stretching step, and a heat treatment step; and heat fixations and relaxation of films after stretching are performed in the heat treatment step. A relaxation rate of a conventional film is about 2 to 10%; however, in the present invention, a relaxation rate is set as a high value, that is 13 to 35%, and a suitable temperature condition for heat treatment is employed, and thereby a porous polypropylene film having low air permeation resistance and low porosity can be obtained.

The heat treatment step preferably divided into the three zones, that is, a heat fixation zone in which a heat treatment is given as keeping the width after transverse stretching (hereinafter, referred to as the HS1 zone), a relaxation zone in which a heat treatment is given as narrowing the width of a tenter to relax a film (hereinafter, referred to as the Rx zone), and a heat fixation zone in which a heat treatment is given as keeping the width after relaxation (hereinafter, referred to as the HS2 zone).

In the present invention, the temperature $T_{HS1}$ in the HS1 zone is preferably ($T_S$-10) °C or more, but ($T_S$ +10) °C or less, in which the $T_S$ represents a stretching temperature in the width direction. When the $T_{HS1}$ is less than ($T_S$-10) °C, a heat shrinkage rate of a porous polypropylene film in the width direction may be increased. On the other hand, when the $T_{HS1}$ is over ($T_S$+10) °C, an orientation of a porous polypropylene film is over relaxed, and a relaxation rate cannot be high in the following Rx zone, and thereby a porous polypropylene film having low air permeation resistance and low porosity cannot be obtained, and air permeation resistance may be increased because a high temperature melts polymers around a hole. The temperature $T_{HS1}$ of the HS1 zone is more preferably ($T_S$-5) °C or more, but ($T_S$ +5) °C or less.

In the present invention, a heat treatment time in the HS1 zone is preferably 0.1 second or more, but 10 seconds or less from the point of view to satisfy both a heat shrinkage rate of a porous polypropylene film in the width direction and productivity.

In the present invention, a relaxation rate in the Rx zone is preferably 13 to 35%. When a relaxation rate is less than 13%, a heat shrinkage rate of a porous polypropylene film in the width direction may be increased, and effects of low air permeation resistance and low porosity may be insufficient. When it is over 35%, thickness unevenness and flatness in the width direction may be worsened. A relaxation rate is more preferably 15 to 25%.

In the present invention, the temperature $T_{RX}$ in the RX zone is preferably ($T_H$+5) °C or more, but ($T_H$+20) °C or less, in which the $T_H$ °C is a higher temperature of either the temperature $T_{HS1}$ in the HS1 zone or the stretching temperature $T_S$. When the temperature $T_{RX}$ in the RX zone is less than ($T_H$+5) °C, shrinkage stress for relaxation becomes low, and the above-mentioned high relaxation rate cannot be achieved, and a heat shrinkage rate of a porous polypropylene film in the width direction may be increased. On the other hand, when it is over ($T_H$+20) °C, air permeation resistance may be increased because a high temperature melts polymers around a hole. It is more preferably ($T_H$+5) °C or more, but ($T_H$+15) °C or less, and still more preferably ($T_H$+7) °C or more, but ($T_H$+15) °C or less.

When a melting point of a polypropylene resin (a mixture, when a mixture of polypropylene resins is used) composing a porous polypropylene film is $T_r$ (°C), the temperature $T_{RX}$ in the RX zone is preferably ($T_r$-4) °C or more, and more preferably ($T_r$-2) °C or more. When the temperature $T_{RX}$ in the RX zone is less than ($T_r$-4) °C, a heat shrinkage rate of a porous polypropylene film in the width direction may be increased, and effects of low air permeation resistance and low porosity may be insufficient. In addition, $T_{Rx}$ is preferably ($T_r$+10) °C or less.

In the present invention, relaxation speed in the RX zone is preferably 100 to 1,000%/min. When relaxation speed is less than 100%/min, speed of membrane production should be made slow, and the length of a tenter should be made long, and thus productivity may be worsened. On the other hand, when it is over 1,000%/min, a film shrinks more rapidly than a rail width of a tenter shrinks, and a film may be fluttered and broken in the tenter, and thereby properties may become uneven, and flatness may be worsened in the width direction. A relaxation speed is more preferably 150 to 500%/min.

In the present invention, the temperature $T_{HS2}$ in the HS2 zone is, to the temperature $T_{RX}$ in the RX zone, preferably ($T_{Rx}$-5) °C or more, but ($T_{Rx}$+5) °C or less. When the $T_{HS2}$ is less than ($T_{Rx}$-5) °C, tenseness of a film after heat relaxation becomes insufficient, properties may become uneven and flatness may be worsened in the width direction, and a heat shrinkage rate in the width direction may be increased. When it is over ($T_{Rx}$+5) °C, air permeation resistance may be increased because a high temperature melts polymers around a hole. The temperature $T_{Hs2}$ in the HS2 zone is more preferably $T_{Rx}$ or more, but ($T_{Rx}$+5) °C or less. In addition, $T_{HS2}$ is preferably (Tr+10) °C or less.

In the present invention, a heat treatment time in the HS2 zone is preferably 0.1 second or more, but 10 seconds or less, from the point of view to satisfy both evenness and flatness in the width direction as well as productivity.

In a porous polypropylene film of the present invention, a 5% heat shrinkage temperature in the width direction of a film (a temperature at which a heat shrinkage rate of a dimension in a width direction of the film is 5%) is 130 to 200 °C. If the temperature is less than 130 °C, a separator may shrink and cause a short circuit when a temperature of a battery is increased during use. When the temperature is higher, it is more preferable because of excellent heat resistance; however, when it is over 200 °C, a dimension in the longitudinal direction at a high temperature may become unstable. More heat resistance is required when used for a separator of a large capacity battery, which is used in electric vehicles and the like, and the temperature is more preferably 140 to 200 °C, still more preferably 150 to 200 °C. To set a 5% heat shrinkage temperature in the width direction of a film within the above-mentioned range, each of the temperatures $T_{HS1}$, $T_{Rx}$, and $T_{HS2}$, which are of HS1 zone, Rx zone, and HS2 zone, respectively, is preferably set as high within a range of the running condition of the above-mentioned heat treatment step, and also a relaxation rate is preferably set as large.

In a porous polypropylene film of the present invention, a 5% heat shrinkage temperature in the longitudinal direction of a film (a temperature at which a heat shrinkage rate of a dimension in a longitudinal direction is 5%) is preferably 140 to 200 °C. In wound type batteries, heat shrinkage in the longitudinal direction of a separator usually does not affect to safety of a battery; however, when heat shrinkage stress is applied at a high temperature, a hole may be deformed to be fold, and thus output properties may be decreased. In laminate type batteries, a heat shrinkage rate in the longitudinal direction also contributes to safety, and if the temperature is less than 140 °C, a separator may shrink and cause a short circuit when a temperature of a battery is increased during use. More heat resistance is required when used for a separator of a large capacity battery, which is used in electric vehicles and the like, and the temperature is more preferably 150 to 200 °C. To set a 5% heat shrinkage temperature in the longitudinal direction of a film within the above-mentioned range, the temperature $T_{HS2}$ of HS2 zone is preferably set as high within a range of the running condition of the above-mentioned heat treatment step.

In a porous polypropylene film of the present invention, a film thickness is preferably 10 to 50 $\mu$m. When the thickness is less than 10 $\mu$m, a film may be broken during use, and when it is over 50 $\mu$m, a volume proportion of a porous film in an electricity storage device becomes too high, and thus high energy density may not be obtained. The film thickness is more preferably 12 to 30 $\mu$m, and still more preferably 14 to 25 $\mu$m.

In a porous polypropylene film of the present invention, elongations at break in the longitudinal direction and the width direction of the film are preferably 40% or more for the both. When an elongation at break is 40% or less, a film may easily be broken in a membrane production and a battery assembling step, and also when used as a separator, flexibility of the porous polypropylene film may be decreased, and a short circuit caused by dendrite may easily be produced. Elongations at break in the longitudinal direction and the width direction are more preferably 60% or more, and still more preferably 70% or more for the both.

In a porous polypropylene film of the present invention, unevenness of thickness is preferably 20% or less to an average thickness value, and unevenness of porosity is preferably 10% or less to an average porosity value. When unevenness of thickness is over 20%, areas in a film width direction that are usable as products are decreased, and thereby productivity is decreased. In addition, when thick portions and thin portions of a separator exist in one battery, ionic streaming is concentrated to low-resistant, thin portions, and thereby cycling characteristics and a life may be decreased. When unevenness of porosity is over 10%, areas in a film width direction that are usable as products are decreased, and thereby productivity is decreased. In addition, when high porosity portions and low porosity portions of a separator exist in one battery, ionic streaming is concentrated to low-resistant, high porosity portions, and thereby cycling characteristics and a life may be decreased. To set unevenness of thickness and unevenness of porosity within the above-described range, taking the above-mentioned temperatures and relaxation speed in Rx zone is effective.

In a porous polypropylene film of the present invention, a rate of hole area on a film surface is preferably 50% or more and more preferably 70% or more. When a rate of hole area is 50% or less, portions without holes are increased, and thereby output properties may be worsened, and also ionic streaming is concentrated to holes, and thereby cycling characteristics and a life may be decreased. To make a rate of hole area as 50% or more, 1 to 20 parts by mass of the above-mentioned ultra low density polyethylene is preferably added to 100 parts by mass of a polypropylene resin whose MFR is 0.1 g/10 min or more, but less than 2 g/10 min.

In a porous polypropylene film of the present invention, a withstand voltage of a film is preferably 2.4 kV or more. It is more preferably 2.5 kV or more. When a withstand voltage is less than 2 kV, safety may be decreased when used for a separator of a large capacity battery, which is used in electric vehicles and the like.

To increase a withstand voltage, it is effective that each of the temperatures $T_{HS1}$, $T_{Rx}$, and $T_{HS2}$, which are of HS1 zone, Rx zone, and HS2 zone, respectively, is set as high within a range of the running condition of the above-mentioned heat treatment step; a relaxation rate is set as large; and 0.5 to 30 parts by mass of the above-mentioned high molecular weight polypropylene is added to 100 parts by mass of a polypropylene resin whose MFR is 0.1 g/10 min or more, but less than 2 g/10 min.

In a porous polypropylene film of the present invention, when a melting point of a porous polypropylene film is Tf (°C), and a melting point of a polypropylene resin (a mixture, when a mixture of polypropylene resins is used) composing a porous polypropylene film is $T_r$ (°C), a value of ($T_f$-$T_r$) is preferably 4 °C or more. If a value of ($T_f$-$T_r$) is 4 °C or more, it is preferable because safety of batteries is improved. From the point of view to improve safety, a value of ($T_f$-$T_r$) is more preferably 4.5 °C or more, still more preferably 5 °C or more, and most preferably 6 °C or more. To increase a value of ($T_f$-$T_r$), it is effective that each of the temperatures $T_{HS1}$, $T_{Rx}$, and $T_{HS2}$, which are of HS1 zone, Rx zone, and HS2 zone, respectively, is set as high within a range of the running condition of the above-mentioned heat treatment step; a relaxation rate is set as large; and 1 to 25 parts by mass of the above-mentioned high molecular weight polypropylene is added to 100 parts by mass of a polypropylene resin whose MFR is 0.1 g/10 min or more, but less than 2 g/10 min.

Hereinafter, a manufacturing method of a porous polypropylene film of the present invention will be specifically explained. Hereinafter, a manufacturing method of a porous polypropylene film made from a polypropylene composition in which a polypropylene resin whose MFR is 0.1 g/10 min or more, but less than 2 g/10 min; a high molecular weight polypropylene resin; and a ultra low density polyethylene resin are mixed as a polypropylene resin will be explained by way of example; however, a manufacturing method of a porous polypropylene film of the present invention is not limited thereto.

As a polypropylene resin, 70 to 99.5 parts by mass of a commercially available homopolypropylene resin whose MFR is from 2 g/10 min to 30 g/10 min and 0.5 to 30 parts by mass of a commercially available polypropylene resin whose MFR is 0.1 g/10 min or more, but less than 2 g/10 min are supplied as raw materials from a scale hopper to a twin-screw extruder so that they are mixed at a ratio within this range, then melt compounded at 240 °C, discharged from a die in a strand shape, cooled and solidified in a water bath at 25 °C, cut as chip-like to produce the polypropylene material (A). Then, 68 to 98 parts by mass of the obtained polypropylene material (A), 0.5 to 30 parts by mass of a ultra low density polyethylene resin whose melting point is 60 to 90 °C, and 0 to 2 parts by mass of an antioxidant are supplied as raw materials from a scale hopper to a twin-screw extruder so that they are mixed at a ratio within this range, then melt compounded at 240 °C, discharged from a die in a strand shape, cooled and solidified in a water bath at 25 °C, cut as chip-like to produce the polypropylene composition (B). In addition, 99.5 parts by mass of the polypropylene material (A), 0.3 part by mass of N,N'-dicyclohexyl-2,6-naphthalene dicarboxamide that is a β-crystal nucleating agent, and 0.2 part by mass of an antioxidant are supplied as raw materials from a scale hopper to a twin-screw extruder so that they are mixed at this ratio, then melt compounded at 300 °C, discharged from a die in a strand shape, cooled and solidified in a water bath at 25 °C, cut as chip-like to produce the polypropylene composition (C).

Next, 10 parts by mass of the polypropylene composition (B) and 90 parts by mass of the polypropylene composition (C) are dry blended, and supplied to a single screw melt extruder to perform melt extrusion at 200 to 230 °C. After contaminants, degeneration polymers and the like are removed by a filter provided inside of a polymer tube, it was discharged from a T die onto a cast drum to obtain an unstretched sheet. To obtain an unstretched sheet, a surface temperature of the cast drum is preferably 105 to 130 °C, from the point of view to highly regulate a fraction of β-crystals in the unstretched sheet. At the time, shaping of an edge of the sheet particularly affects to the following stretch, spot air is preferably sprayed to the edge so that the edge is closely attached onto the drum. In addition, based on how the whole sheet is closely attached onto the drum, air can be sprayed to the whole surface by using an air knife as necessary. In addition, coextrusion can be performed for lamination by using a plurality of extruders and a pinole.

Then, the obtained unstretched sheet is biaxially stretched to form a hole (through hole) in a film. As a biaxial stretching method, a successive biaxial stretching method, in which a film is stretched in the longitudinal direction and then in the width direction, or is stretched in the width direction and then in the longitudinal direction; a simultaneous biaxial stretching method in which a film is stretched in the longitudinal direction and in the width direction almost at the same time; or the like method can be utilized. Of these, a successive biaxial stretching method can preferably be used because a film having high air permeability can easily be obtained, and in particular, stretching is performed preferably in the longitudinal direction and then in the width direction.

As specific stretching conditions, first, an unstretched sheet is controlled to a temperature that allows stretching in the longitudinal direction. As a method to control the temperature, a method using a temperature-controlled rotating roll, a method using a hot air oven, or the like method can be used. A stretching temperature in the longitudinal direction is preferably 110 to 140 °C, more preferably 120 to 135 °C, particularly preferably 123 to 130 °C, from the point of view of properties and uniformity of films. A stretching scaling factor is 4 to 8 fold, more preferably 4.5 to 5.8 fold. In addition, when a stretching scaling factor is higher, porosity also becomes higher; however, when stretched over 8 fold, a film may tend to be torn at the following transverse stretching step.

Next, a uniaxially stretched polypropylene film is introduced into a tenter stretching machine with an edge of the film held, then stretched 2 to 12 fold, more preferably 6 to 11 fold, and still more preferably 6.5 to 10 fold in the width direction, as heated to preferably at 130 to 155 °C, and more preferably 145 to 153 °C. Note that a transverse stretching speed at this time is preferably 500 to 6,000%/min, and more preferably 1,000 to 5,000%/min

Then, heat treatment is performed as still left in the tenter. To obtain a film of the present invention, which has low air permeation resistance, low porosity, and low heat shrinkage rate, the above-mentioned running conditions of HS1 zone, Rx zone, and HS2 zone are preferably employed.

After the heat treatment step, an ear portion of a film, which is held by a clip of the tenter, is slit and removed, and the film is wound on a core with a winder to prepare a product.

A porous polypropylene film of the present invention, which has low air permeation resistance, low porosity, and low heat shrinkage rate, can be used in uses of packaging supplies, sanitary supplies, agricultural supplies, construction supplies, medical supplies, separation membranes, light diffusion plates, and reflecting sheets. In particular, it is preferably used as a separator for electricity storage devices, because both output properties and safety are satisfied. Examples of electricity storage devices include nonaqueous electrolyte secondary batteries represented by lithium ion secondary batteries and electric double layer capacitors such as lithium ion capacitors. Such electricity storage devices can be repeatedly used by charging and discharging, and thus can be used as power supply devices for industrial devices, life equipment, electric vehicles, hybrid electric vehicles, and the like. In particular, because an electricity storage device whose separator utilizes a porous polypropylene film of the present invention has excellent output properties, it is preferably used for nonaqueous electrolyte secondary batteries for electric vehicles.

Examples

Hereinafter, the present invention will be specifically explained with Examples. Note that properties are measured and evaluated by the following methods.

(1) β-crystal forming ability

As a sample, 5 mg of polypropylene resin (a mixture, when a mixture of polypropylene resins is used) or porous polypropylene film was taken in an aluminum pan, and measured by using a differential scanning calorimeter (RDC220, manufactured by Seiko Instruments Inc.). First, the temperature was raised from room temperature to 260 °C at a rate of 20 °C/min under nitrogen atmosphere (first run), the temperature was kept for 10 minutes, and then lowered to 20 °C at a rate of 10 °C/min. After keeping the temperature for 5 minutes, when the temperature was raised again at a rate of 20 °C/min (second run), melting peaks were observed. Melting peaks observed in 145 to 157 °C of temperature range were resulting from melting of β-crystals, and melting peaks observed at 158 °C or higher were resulting from melting of α-crystals. Each quantity of heat of fusion was calculated from an area of a region surrounded by a baseline that was drawn based on a flat region at the higher temperature side, and peak, and where quantity of heat of fusion of α-crystals is $\Delta H\alpha$, and quantity of heat of fusion of β-crystals is $\Delta H\beta$, a value calculated according to the expression below is the β-crystal forming ability. Note that calibration of quantity of heat of fusion was conducted with indium.

$$\beta\text{-crystal forming ability (\%)} = ``"\Delta H\beta/(\Delta H\alpha+\Delta H\beta)]\times100$$

Similarly, by calculating a ratio of existing β-crystals from melting peaks observed in the first run, a fraction of β-crystals in the state of the sample can be calculated.

(2) Melting point (Tm)

A polypropylene resin was measured by a method similar to the above-described method for measuring β-crystal forming ability, and a peak temperature (α-crystals) in the second run is defined as a melting point (Tm).

5% Shrinkage temperature

Each of shrinkage curves in the longitudinal direction and in the width direction of a film was found under constant load, by using TMA/SS6000 manufactured by Seiko Instruments Inc. with the below-described temperature program.

A temperature when a sample shrank 5% from the original sample length was determined from the obtained shrinkage curve.

Temperature program: 25 °C → (5 °C/min) → 160 °C (hold 5 minutes)
Load: 2g
Sample size: sample length 15 mm × width 4 mm
(A direction to be measured is set to the sample length side.)

(4) Melt flow rate (MFR)

The MFR of a polypropylene resin was measured according to the condition M (230 °C, 2.16 kg) of the JIS K 7210(1995). A polyethylene resin was measured according to the condition D (190 °C, 2.16 kg) of the JIS K 7210(1995).

(5) Porosity

A porous polypropylene film was cut into the size of 30 mm × 40 mm, and used as a sample. Density was measured at a room temperature of 23 °C, and under the atmosphere of 65% relative humidity by using an electronic densimeter (SD-120L, manufactured by Alfa Mirage Co., Ltd.). Measurements were performed three times, and an average value was defined as the density "$\rho$" of the film.

Next, the measured film was heat-pressed at 280 °C, 5 MPa, and then quenched with water of 25 °C to produce a sheet in which all holes were completely eliminated. The density of the sheet was similarly measured by the above-mentioned method, and an average value was defined as the density (d) of the resin. Note that, in the below-mentioned Examples, densities "d" of resins were 0.91 in all of the cases. Porosity was calculated according to the following expression, based on densities of films and densities of resins.

$$\mathtt{Porosity\ (\%)\ =\ [(d-\rho)/d]\ \times\ 100}$$

(6) Rate of hole area

A porous polypropylene film was ion coated by using the IB-5 ion coater manufactured by Eiko Engineering Co., Ltd., and a film surface was observed with a magnification of 5,000 fold by using a field emission scanning electron microscope (JSM-6700F) manufactured by JEOL Ltd., to obtain image data within the range of 13 $\mu$m wide and 10 $\mu$m long. Obtained image data (images of observed areas only, and scale bars or the like were not indicated) were subjected to image analyses by using Image-Pro Plus Ver. 4.5 manufactured by Planetron, Inc., and area rates of hole portions were calculated. In the image analyzing method, first, Flatten Filter (dark, 10 pixels) was carried out once to correct uneven brightness, and then Median Filter (kernel size 3×3) was carried out once to remove noise. Then, Local Equalization Filter (logarithmic distribution, small window 100, Step 1) was carried out once to brightly enhance resin portions, and contrast was adjusted (contrast 100). A percent area of detected hole portions to a whole area was calculated by Percent Area Measurement in the item of Count/Size to calculate the rate of hole area (%). Ten parts on each of both surfaces of one porous polypropylene film were measured, and an average value thereof was defined as a rate of hole area of the sample.

(7) Air permeation resistance

A square of 100 mm × 100 mm size was cut out from a porous polypropylene film, and used as a sample. For 100 ml of air, an air permeation time was measured at 23°C and 65% of relative humidity by using a B-type Gurley tester according to the JIS P 8117 (1998). Measurements were performed three times as replacing samples, and an average value of air permeation times was defined as air permeability of the film. Note that, if a value of the air permeability is a finite value, it can be confirmed that through holes are formed in the film.

(8) Elongation at break

A rectangle of length 150 mm × width 10 mm size was cut out from a porous polypropylene film, and used as a sample. Note that the length direction of 150 mm was set to the longitudinal direction and the width direction of a film. Each of the longitudinal direction and the width direction of a porous polypropylene film was subjected to a tension test by using a tension testing instrument (TENSILON UCT-100, manufactured by Orientec Co., LTD.), with 50 mm of an initial chuck-to-chuck distance and 300 mm/min of a tension speed. A value obtained by dividing a change in the film length when the sample was broken by a sample length before testing (50 mm) and then multiplying by 100, was defined as an indicator of elongation at break. Measurements were performed on five samples for each of the longitudinal direction and the width direction, and average values thereof were used for evaluations.

(9) Film thickness

A film thickness was measured by using a dial thickness gauge (JIS B-7503(1997), UPRIGHT DIAL GAUGE (0.001 × 2 mm), No. 25, a probe of 10 mm φ flat contact point, and 50 gf load, manufactured by PEACOCK.

(10) Unevenness of thickness

A thickness profile in the width direction was measured for an overall width at a 1 cm interval along the width direction by using the above-mentioned film thickness measuring method. Where the maximum value among all measured points is $t_{max}$, the minimum value is $t_{min}$, and an average value is $t_{ave}$, an unevenness of thickness (%) in the width direction to an average value of thickness was calculated according to the following expression.

$$\text{Unevenness of thickness (\%)} = (t_{max}-t_{min})/t_{ave} \times 100$$

(11) Unevenness of porosity

A porosity profile in the width direction was measured for an overall width at a 5 cm interval along the width direction by using the above-mentioned porosity measuring method. Where the maximum value among all measured points is $\varphi_{max}$, the minimum value is $\varphi_{min}$, and an average value is $\varphi_{ave}$, an unevenness of porosity (%) in the width direction to an average value of porosity was calculated according to the following expression.

$$\text{Unevenness of porosity (\%)} = (\varphi_{max}-\varphi_{min})/ \varphi_{ave} \times 100$$

(12) Evaluation of battery properties

A cathode manufactured by Hohsen Corp., whose thickness of lithium cobalt oxide ($LiCoO_2$) is 40 μm was punched into a round shape having a diameter of 15.9 mm; an anode manufactured by Hohsen Corp., whose thickness of graphite is 50 μm was punched into a round shape having a diameter of 16.2 mm; and a film for a separator of each of Examples and Comparative Examples was punched into a diameter of 24.0 mm. Then, the anode, separator, and cathode were layered from bottom to top in this order so that surfaces of a cathode active material and an anode active material are faced each other, and stored in a small stainless container having a lid. The container and lid are insulated, and the container contacts with a copper foil of an anode, and the lid contacts with an aluminum foil of the cathode. An electrolyte in which $LiPF_6$ is dissolved as a solute in a mixed solvent of ethylene carbonate: dimethyl carbonate=3:7 (mass ratio) to be a 1 M/L solution was poured into the container, and sealed. A battery was prepared for each of Examples and Comparative Examples.

Charging and discharging manipulation in which charging at 3 mA, to 4.2 V for 1.5 hours, and discharging at 3 mA, to 2.7 V under the atmosphere of 25 °C was conducted to each of the prepared secondary batteries to test a discharge capacity. In addition, charging and discharging manipulation in which charging at 3 mA, to 4.2 V for 1.5 hours, and discharging at 30 mA, to 2.7 V was conducted to test a discharge capacity.

A value obtained by the following expression:

$$[(\text{discharge capacity at 30 mA})/(\text{discharge capacity at } 3 \text{ mA})] \times 100$$

was evaluated according to the criteria below. Note that 20 batteries were measured, and an average value thereof was evaluated.

    o: 85% or more.
    Δ: 75% or more, but less than 85%.
    ×: less than 75%.

(13) Safety evaluation

For a safety evaluation, a single layer laminated cell described below was prepared. As an enforced deterioration test for assumed contaminations at the time of assembling, metal particles were forced to contaminate between an anode and a separator, and after leaving it at 100 °C for 2 hours, decrease of a capacity was evaluated.
A cathode manufactured by Hohsen Corp., whose thickness of lithium cobalt oxide ($LiCoO_2$) is 40 μm was punched so

that an active material portion becomes a square shape of 47 mm $\times$ 47 mm; a graphite anode manufactured by Hohsen Corp., whose thickness is 50 $\mu$m was punched so that an active material portion becomes a square shape of 50 mm $\times$ 50 mm; and a porous film of each of Examples and Comparative Examples was punched into a square shape of 55 mm in the longitudinal direction, and 55 mm in the width direction. Then, the anode, 1 mg of metal particles (an average particle size is 15 $\mu$m, spherical copper particles manufactured by Alfa Aesar), a porous polypropylene film, and cathode were layered from bottom to top in this order so that surfaces of a cathode active material and an anode active material are faced each other, and three-way sealed with a laminate film on which an Al foil is deposited. An electrolyte in which $LiPF_6$ is dissolved as a solute in a mixed solvent of ethylene carbonate: dimethyl carbonate=3:7 (volume ratio) to be a 1 mol/litter solution was poured, and sealed after vacuum deaeration. A battery was prepared for each of Examples and Comparative Examples.

To measure a discharge capacity 1, each of the prepared secondary batteries was charged at 30 mA, to 4.2 V for 3.5 hours under the atmosphere of 25 °C, left for 30 minutes under the atmosphere of 25 °C, and discharged at 30 mA, to 2.7 V. After that, to measure a discharge capacity 2, it was charged at 30 mA, to 4.2 V for 3.5 hours under the atmosphere of 25 °C, left for 2 hours under the atmosphere of 100 °C, and discharged at 30 mA, to 2.7 V. A value obtained by the following expression:

$$[(\text{discharge capacity 2})/(\text{discharge capacity 1})] \times 100$$

was evaluated according to the criteria below. Note that 20 batteries were measured, and evaluated according to the criteria below.

○: An average value of 20 batteries was 90% or more, and values of none of the batteries were less than 20%.

△: An average value of 20 batteries was 80% or more, but less than 90%, and values of none of the batteries were less than 20%.

×: An average value of 20 batteries was less than 80%, or one or more batteries were less than 20%.

(14) Difference $(T_f-T_r)$ between a melting point $T_f$ (°C) of a porous polypropylene film and a melting point $T_r$ (°C) of a polypropylene resin (a mixture, when a mixture of polypropylene resins is used) composing a porous polypropylene film

A porous polypropylene film was measured by a method similar to the above-described method for measuring $\beta$-crystal forming ability, and a peak temperature ($\alpha$-crystals) in the first run is defined as the melting point $T_f$ (°C) of the porous polypropylene film.

The melting point $T_r$ (°C) of a polypropylene resin composing a porous polypropylene film was measured by the following method. First, polypropylene resins composing a porous polypropylene film are supplied as raw materials from a scale hopper to a twin-screw extruder so that they are mixed at a ratio of blending quantities of the raw materials, then melt compounded at 240 °C, discharged from a die in a strand shape, cooled and solidified in a water bath at 25 °C, cut into a chip-like shape to produce the polypropylene resin mixture (the polypropylene resin mixture does not contain a $\beta$-crystal nucleating agent or other additives). Then, the polypropylene resin mixture was measured by a method similar to the above-described method for measuring $\beta$-crystal forming ability, and a peak temperature ($\alpha$-crystals) in the second run is defined as the melting point $T_r$ (°C) of the polypropylene resin mixture composing a porous polypropylene film. The difference $(T_f-T_r)$ was calculated from obtained $T_f$ and $T_r$.

(15) Withstand voltage of porous polypropylene film

A porous polypropylene film of 60 cm $\times$ 70 cm was placed on a copper plate of 60 cm $\times$ 70 cm, and an aluminum deposited polypropylene film of 50 cm $\times$ 60 cm was placed thereon, and then the direct current type pressure resistant tester SDH-1020P manufactured by KASUGA ELECTRIC WORKS LTD. was connected. A starting voltage was 0.5 kV, and it was step boosted 0.1 kV by 0.1 kV, at a boosting speed of 0.01 kV/sec. During holding for 30 seconds at each of applied voltages, the number of breakdowns was counted for each of applied voltages, and an applied voltage at which breakdowns was over 10 was defined as a withstand voltage. The measurements were performed five times, and an average value thereof was defined as a withstand voltage of a porous polypropylene film.

(Example 1)

As a polypropylene resin, 95 parts by mass of the homopolypropylene FLX80E4, manufactured by Sumitomo Chemical Company, Limited, MFR=7.5 g/10 min and 5 parts by mass of the homopolypropylene D101, manufactured by Sumitomo Chemical Company, Limited, MFR=0.5 g/10 min were supplied as raw materials from a scale hopper to a twin-screw extruder so that they were mixed at this ratio, then melt compounded at 240 °C, discharged from a die in a strand shape, cooled and solidified in a water bath at 25 °C, cut into a chip-like shape, and used as a polypropylene raw material (polypropylene resin mixture D).

Then, 70 parts by mass of the polypropylene resin mixture D; 25 parts by mass of ethylene/1-octene copolymer (Engage 8411, MFR:18 g/10 min, manufactured by the Dow Chemical Company) as a copolymerized PE resin; and 0.1 part by mass of each of IRGANOX1010 and IRGAFOS168 manufactured by Ciba Specialty Chemicals Inc., which are antioxidants, were supplied as raw materials from a scale hopper to a twin-screw extruder so that they were mixed at this ratio, then melt compounded at 240 °C, discharged from a die in a strand shape, cooled and solidified in a water bath at 25 °C, cut into a chip-like shape to obtain the polypropylene composition (E).

In addition, 99.5 parts by mass of the polypropylene resin mixture D; 0.3 part by mass of N,N'-dicyclohexyl-2,6-naphthalene dicarboxamide (NU-100, manufactured by New Japan Chemical Co., Ltd.) which is a β-crystal nucleating agent; and 0.1 part by mass of each of IRGANOX1010 and IRGAFOS168 manufactured by Ciba Specialty Chemicals Inc., which are antioxidants, were supplied as raw materials from a scale hopper to a twin-screw extruder so that they were mixed at this ratio, then melt compounded at 300 °C, discharged from a die in a strand shape, cooled and solidified in a water bath at 25 °C, cut into a chip-like shape to obtain the polypropylene composition (F).

Ten parts by mass of the obtained polypropylene composition (E) and 90 parts by mass of the polypropylene composition (F) were dry blended, and supplied to a single screw melt extruder to perform melt extrusion at 220 °C. After contaminants were removed by a 20 $\mu$m cut sintered filter, it was discharged from a T die onto a cast drum whose surface temperature was controlled to be 120 °C, and cast to be contacted with the drum for 15 seconds to obtain an unstretched sheet. Preheating was performed by using a ceramic roll that was heated to 125 °C, and the film was stretched five-fold in the longitudinal direction. Then, the film was introduced into a tenter stretching machine with an edge of the film held by a clip, and stretched 6.5-fold at 150 °C, at a stretching speed of 1,800%/min. Note that a distance between clips in the width direction at an inlet of the tenter was 150 mm.

In the following heat treatment step, the film was heat treated at 150 °C for 3 seconds while keeping the distance between clips after stretching (HS1 zone); relaxed at 162 °C with a relaxation rate of 22% and a relaxation speed of 290%/min (Rx zone); and finally heat treated at 162 °C for 5 seconds while keeping the distance between clips after relaxation (HS2 zone).

After that, an ear portion of a film, which was held by a clip of the tenter, was slit and removed, and 500 m of a porous polypropylene film having a width of 500 mm and a thickness of 25 $\mu$m was wound on a core with a winder.

The porous polypropylene film of Example 1, which was produced as described above, was measured and evaluated by the method described in the above (1) to (14). The results are listed in Table 1. Note that a melting point $T_r$ of the polypropylene resin mixture composing the porous polypropylene film (not containing antioxidants and β-crystal nucleating agents) was 165 °C. A withstand voltage of the porous polypropylene film was 2.7 kV.

(Example 2)

A porous polypropylene film having a width of 500 mm and a thickness of 25 $\mu$m was obtained with the same conditions as in Example 1, except that conditions in Rx zone was changed to 162 °C with a relaxation rate of 20% and a relaxation speed of 260%/min

The porous polypropylene film of Example 2, which was produced as described above, was measured and evaluated by the method described in the above (1) to (14). The results are listed in Table 1.

(Example 3)

A porous polypropylene film having a width of 500 mm and a thickness of 25 $\mu$m was obtained with the same conditions as in Example 1, except that conditions in Rx zone was changed to 162 °C with a relaxation rate of 14% and a relaxation speed of 180%/min

The porous polypropylene film of Example 3, which was produced as described above, was measured and evaluated by the method described in the above (1) to (14). The results are listed in Table 1.

(Example 4)

A porous polypropylene film having a width of 500 mm and a thickness of 25 $\mu$m was obtained with the same conditions as in Example 1, except that conditions in Rx zone was changed to 162 °C with a relaxation rate of 30% and a relaxation speed of 390%/min

The porous polypropylene film of Example 4, which was produced as described above, was measured and evaluated by the method described in the above (1) to (14). The results are listed in Table 1.

(Example 5)

A porous polypropylene film having a width of 500 mm and a thickness of 25 μm was obtained with the same conditions as in Example 1, except that conditions in Rx zone was changed to 160 °C with a relaxation rate of 22% and a relaxation speed of 290%/min, and the temperature in HS2 zone was changed to 160 °C.

The porous polypropylene film of Example 5, which was produced as described above, was measured and evaluated by the method described in the above (1) to (14). The results are listed in Table 1.

(Example 6)

As a polypropylene resin, 99.5 parts by mass of the homopolypropylene FLX80E4, manufactured by Sumitomo Chemical Company, Limited, MFR=7.5 g/10 min; 0.3 part by mass of N,N'-dicyclohexyl-2,6-naphthalene dicarboxamide (NU-100, manufactured by New Japan Chemical Co., Ltd.), which is a β-crystal nucleating agent; and 0.1 part by mass of each of IRGANOX1010 and IRGAFOS168 manufactured by Ciba Specialty Chemicals Inc., which are antioxidants, were supplied as raw materials from a scale hopper to a twin-screw extruder so that they were mixed at this ratio, then melt compounded at 300 °C, discharged from a die in a strand shape, cooled and solidified in a water bath at 25 °C, cut into a chip-like shape to obtain the polypropylene composition (G).

After 100 parts by mass of the obtained polypropylene composition (G) was supplied to a single screw melt extruder, a porous polypropylene film having a width of 500 mm and a thickness of 25 μm was obtained with the same conditions as in Example 1

The porous polypropylene film of Example 6, which was produced as described above, was measured and evaluated by the method described in the above (1) to (14). The results are listed in Table 1. Note that a melting point $T_r$ of the polypropylene resin composing the porous polypropylene film (FLX80E4) was 165 °C.

(Example 7)

A porous polypropylene film having a width of 500 mm and a thickness of 25 μm was obtained with the same conditions as in Example 6, except that conditions in Rx zone was changed to 162 °C with a relaxation rate of 20% and a relaxation speed of 260%/min

The porous polypropylene film of Example 7, which was produced as described above, was measured and evaluated by the method described in the above (1) to (14). The results are listed in Table 1.

(Example 8)

A porous polypropylene film having a width of 500 mm and a thickness of 25 μm was obtained with the same conditions as in Example 1, except that a relaxation speed in Rx zone was changed to 480%/min

The porous polypropylene film of Example 8, which was produced as described above, was measured and evaluated by the method described in the above (1) to (14). The results are listed in Table 1.

(Example 9)

A porous polypropylene film having a width of 500 mm and a thickness of 25 μm was obtained with the same conditions as in Example 1, except that a relaxation speed in Rx zone was changed to 870%/min

The porous polypropylene film of Example 9, which was produced as described above, was measured and evaluated by the method described in the above (1) to (14). The results are listed in Table 1.

(Example 10)

A porous polypropylene film having a width of 500 mm and a thickness of 25 μm was obtained with the same conditions as in Example 1, except that, in the stretching zone, the temperature and scaling factor were changed to 149 °C and 7.8 fold respectively; in HS1 zone, the temperature was changed to 149 °C; in Rx zone, the temperature, relaxation rate, and relaxation speed were changed to 163 °C, 20%, and 260%/min, respectively; and in HS2 zone, the temperature was changed to 163 °C.

The porous polypropylene film of Example 10, which was produced as described above, was measured and evaluated by the method described in the above (1) to (14). The results are listed in Table 1.

(Example 11)

A porous polypropylene film having a width of 500 mm and a thickness of 25 μm was obtained with the same conditions as in Example 1, except that, in the stretching zone, the temperature and scaling factor were changed to 149 °C and 9.4 fold respectively; in HS1 zone, the temperature was changed to 149 °C; in Rx zone, the temperature, relaxation rate, and relaxation speed were changed to 163 °C, 20%, and 260%/min, respectively; and in HS2 zone, the temperature was changed to 163 °C.
The porous polypropylene film of Example 11, which was produced as described above, was measured and evaluated by the method described in the above (1) to (14). The results are listed in Table 1.

(Comparative Example 1)

A porous polypropylene film having a width of 500 mm and a thickness of 25 μm was obtained with the same conditions as in Example 1, except that, in HS1 zone, the temperature was changed to 158 °C; in Rx zone, the temperature, relaxation rate, and relaxation speed were changed to 158 °C, 10%, and 130%/min, respectively; and in HS2 zone, the temperature was changed to 158 °C. A withstand voltage of the porous polypropylene film was 2.2 kV. The porous polypropylene film of Comparative Example 1, which was produced as described above, was measured and evaluated by the method described in the above (1) to (14). The results are listed in Table 2.

(Comparative Example 2)

A porous polypropylene film having a width of 500 mm and a thickness of 25 μm was obtained with the same conditions as in Comparative Example 1, except that 100 parts by mass of the polypropylene composition (G) used in Example 6 was supplied as a raw material to a single screw melt extruder. The porous polypropylene film of Comparative Example 2, which was produced as described above, was measured and evaluated by the method described in the above (1) to (14). The results are listed in Table 2.

(Comparative Example 3)

A porous polypropylene film having a width of 500 mm and a thickness of 25 μm was obtained with the same conditions as in Example 1, except that, in HS1 zone, the temperature was changed to 162 °C; and in Rx zone, the temperature, relaxation rate, and relaxation speed were changed to 162 °C, 20%, and 260%/min, respectively. The porous polypropylene film of Comparative Example 3, which was produced as described above, was measured and evaluated by the method described in the above (1) to (14). The results are listed in Table 2.

(Comparative Example 4)

A porous polypropylene film having a width of 500 mm and a thickness of 25 μm was obtained with the same conditions as in Example 1, except that, in the tenter, the stretching scaling factor and stretching speed were changed to 5.2 fold and 1,440%/min, respectively; and in Rx zone, the temperature, relaxation rate, and relaxation speed were changed to 162 °C, 0%, and 0%/min, respectively. The porous polypropylene film of Comparative Example 4, which was produced as described above, was measured and evaluated by the method described in the above (1) to (14). The results are listed in Table 2.

(Comparative Example 5)

A porous polypropylene film having a width of 500 mm and a thickness of 25 μm was obtained with the same conditions as in Example 1, except that, in HS1 zone, the temperature was changed to 165 °C; in Rx zone, the temperature, relaxation rate, and relaxation speed were changed to 165 °C, 20%, and 260%/min, respectively; and in HS2 zone, the temperature was changed to 165 °C. The porous polypropylene film of Comparative Example 5, which was produced as described above, was measured and evaluated by the method described in the above (1) to (14). The results are listed in Table 2.

(Comparative Example 6)

A porous polypropylene film having a width of 500 mm and a thickness of 25 $\mu$m was obtained with the same conditions as in Example 1, except that, in the stretching zone, the scaling factor was changed to 6.0 fold; in Rx zone, the temperature, relaxation rate, and relaxation speed were changed to 155 °C, 5%, and 65%/min, respectively; and in HS2 zone, the temperature was changed to 155 °C. The porous polypropylene film of Comparative Example 6, which was produced as described above, was measured and evaluated by the method described in the above (1) to (14). The results are listed in Table 2.

(Comparative Example 7)

A porous polypropylene film having a width of 500 mm and a thickness of 25 $\mu$m was obtained with the same conditions as in Example 1, except that, in the stretching zone, the scaling factor was changed to 6.0 fold; in Rx zone, the temperature and relaxation speed were changed to 155 °C and 260%/min, respectively; and in HS2 zone, the temperature was changed to 155 °C. The porous polypropylene film of Comparative Example 7, which was produced as described above, was measured and evaluated by the method described in the above (1) to (14). The results are listed in Table 2.

(Comparative Example 8)

A porous polypropylene film having a width of 500 mm and a thickness of 25 $\mu$m was obtained with the same conditions as in Example 1, except that, in a stretching to the longitudinal direction, the stretching scaling factor and stretching temperature were changed to 4.2 fold and 128 °C, respectively; in a stretching to a transverse direction, the scaling factor in the stretching zone was changed to 6.0 fold; in Rx zone, the temperature, relaxation rate, and relaxation speed were changed to 155 °C, 5%, and 65%/min, respectively; and in HS2 zone, the temperature was changed to 155 °C. The porous polypropylene film of Comparative Example 8, which was produced as described above, was measured and evaluated by the method described in the above (1) to (14). The results are listed in Table 2.

(Comparative Example 9)

A porous polypropylene film having a width of 500 mm and a thickness of 25 $\mu$m was obtained with the same conditions as in Example 1, except that, in a stretching to the longitudinal direction, the stretching scaling factor and stretching temperature were changed to 4.2 fold and 130 °C, respectively; in a stretching to a transverse direction, the scaling factor in the stretching zone was changed to 6.0 fold; in Rx zone, the temperature, relaxation rate, and relaxation speed were changed to 155 °C, 5%, and 65%/min, respectively; and in HS2 zone, the temperature was changed to 155 °C. The porous polypropylene film of Comparative Example 9, which was produced as described above, was measured and evaluated by the method described in the above (1) to (14). The results are listed in Table 2.

(Comparative Example 10)

A porous polypropylene film having a width of 500 mm and a thickness of 25 $\mu$m was obtained, by using the homopolypropylene FLX80E4, manufactured by Sumitomo Chemical Company, Limited, MFR=7.5 g/10 min, as an only polypropylene resin, and blending quantities of antioxidants and $\beta$-crystal nucleating agents, as well as conditions of membrane production were the same as of Comparative Example 5. The porous polypropylene film of Comparative Example 10, which was produced as described above, was measured and evaluated by the method described in the above (1) to (14). The results are listed in Table 2.
Note that a melting point $T_r$ of the polypropylene resin composing the porous polypropylene film (FLX80E4) was 165 °C.
Table 1

| | | | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|---|
| Conditions of membrane formation | Stretching zone | Longitudinal | Temperature | °C | 125 | 125 | 125 | 125 | 125 | 125 | 125 | 125 | 125 | 125 | 125 |
| | | | Stretching ratio | fold | 5 | 5 | 5 | 5 | 5 | 5 | 5 | 5 | 5 | 5 | 5 |
| | | Width | Temperature | °C | 150 | 150 | 150 | 150 | 150 | 150 | 150 | 150 | 150 | 149 | 149 |
| | | | Stretching ratio | fold | 6.5 | 6.5 | 6.5 | 6.5 | 6.5 | 6.5 | 6.5 | 6.5 | 6.5 | 7.8 | 9.4 |
| | HS1 zone | | Temperature | °C | 150 | 150 | 150 | 150 | 150 | 150 | 150 | 150 | 150 | 149 | 149 |
| | | | Time | sec | 3 | 3 | 3 | 3 | 3 | 3 | 3 | 3 | 3 | 3 | 3 |
| | Rx zone | | Temperature | °C | 162 | 162 | 162 | 162 | 160 | 162 | 162 | 162 | 162 | 163 | 163 |
| | | | Relaxation rate | % | 22 | 20 | 14 | 30 | 22 | 22 | 20 | 22 | 22 | 20 | 20 |
| | | | Relaxation speed | %/min | 290 | 260 | 180 | 390 | 290 | 290 | 260 | 480 | 870 | 260 | 260 |
| | HS2 zone | | Temperature | °C | 162 | 162 | 162 | 162 | 160 | 162 | 162 | 162 | 162 | 163 | 163 |
| | | | Time | sec | 5 | 5 | 5 | 5 | 5 | 5 | 5 | 5 | 5 | 5 | 5 |
| Film properties | β-crystal forming ability | | | % | 91 | 91 | 91 | 91 | 91 | 92 | 92 | 91 | 91 | 91 | 91 |
| | 5% Shrinkage temperature | MD | | °C | 143 | 141 | 140 | 143 | 140 | 143 | 141 | 143 | 143 | 143 | 143 |
| | | TD | | °C | 141 | 136 | 131 | 151 | 135 | 141 | 136 | 142 | 142 | 141 | 140 |
| | Air permeation resistance | | | sec/100 m | 250 | 240 | 220 | 270 | 210 | 350 | 300 | 260 | 290 | 190 | 200 |
| | Porosity | | | % | 56 | 60 | 65 | 55 | 66 | 54 | 60 | 56 | 56 | 61 | 60 |
| | Expression (1) | | | | 1090 | 1140 | 1195 | 1095 | 1200 | 1160 | 1200 | 1100 | 1130 | 1105 | 1100 |
| | Rate of hole area | | | % | 72 | 72 | 74 | 69 | 73 | 38 | 40 | 70 | 70 | 74 | 75 |
| | Tf−Tr | | | °C | 5.8 | 5.5 | 4.4 | 6.1 | 4.1 | 4.8 | 4.6 | 5.2 | 5.1 | 6.6 | 6.5 |
| | TD unevenness of thickness | | | % | 15 | 13 | 12 | 21 | 13 | 14 | 15 | 18 | 23 | 12 | 11 |
| | TD unevenness of porosity | | | % | 2 | 2 | 2 | 8 | 2 | 2 | 2 | 2 | 11 | 2 | 1.8 |
| Evaluation of batteries | Evaluation of output properties | | | | o | o | o | o | o | Δ | Δ | o | o | o | o |
| | Evaluation of safety | | | | o | o | Δ | o | Δ | o | o | o | o | o | o |

Table 2

| | | | | | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 | Comp. Example 10 |
|---|---|---|---|---|---|---|---|---|---|---|---|---|---|---|---|---|
| Conditions of membrane formation | Stretching zone | Longitudinal | Temperature | °C | 125 | 125 | 125 | 125 | 125 | 125 | 125 | 128 | 130 | 125 | |
| | | | Stretching ratio | fold | 5 | 5 | 5 | 5 | 5 | 5 | 5 | 4.2 | 4.2 | 5 | |
| | | Width | Temperature | °C | 150 | 150 | 150 | 150 | 150 | 150 | 150 | 150 | 150 | 150 | |
| | | | Stretching ratio | fold | 6.5 | 6.5 | 6.5 | 5.2 | 6.5 | 6 | 6 | 6 | 6 | 6.5 | |
| | HS1 zone | | Temperature | °C | 158 | 158 | 162 | 150 | 165 | 150 | 150 | 150 | 150 | 165 | |
| | | | Time | sec | 3 | 3 | 3 | 3 | 3 | 3 | 3 | 3 | 3 | 3 | |
| | Rx zone | | Temperature | °C | 158 | 158 | 162 | 162 | 165 | 155 | 155 | 155 | 155 | 165 | |
| | | | Relaxation rate | % | 10 | 10 | 20 | 0 | 20 | 5 | 22 | 5 | 5 | 20 | |
| | | | Relaxation speed | %/min | 130 | 130 | 260 | 0 | 260 | 65 | 260 | 65 | 65 | 260 | |
| | HS2 zone | | Temperature | °C | 158 | 158 | 162 | 162 | 165 | 155 | 155 | 155 | 155 | 165 | |
| | | | Time | sec | 5 | 5 | 5 | 5 | 5 | 5 | 5 | 5 | 5 | 5 | |
| Film properties | β-crystal forming ability | | | % | 91 | 92 | 91 | 91 | 91 | 91 | 91 | 91 | 91 | 91 | |
| | 5% Shrinkage temperature | MD | | °C | 132 | 143 | 138 | 133 | 144 | 130 | 131 | 132 | 131 | 144 | |
| | | TD | | °C | 125 | 126 | 138 | 121 | 148 | 118 | 120 | 119 | 118 | 140 | |
| | Air permeation resistance | | | sec/100 m | 180 | 330 | 260 | 180 | 600 | 150 | 170 | 300 | 380 | 550 | |
| | Porosity | | | % | 75 | 54 | 69 | 74 | 55 | 80 | 78 | 68 | 64 | 56 | |
| | Expression (1) | | | | 1305 | 1140 | 1295 | 1290 | 1425 | 1350 | 1340 | 1320 | 1340 | 1390 | |
| | Rate of hole area | | | % | 75 | 45 | 70 | 75 | 55 | 75 | 73 | 68 | 48 | 58 | |
| | Tf−Tr | | | °C | 3.3 | 3.2 | 3.9 | 3.7 | 7.1 | 3.0 | 3.1 | 3.0 | 3.0 | 7.1 | |
| | TD unevenness of thickness | | | % | 13 | 13 | 13 | 13 | 22 | 13 | 15 | 13 | 15 | 22 | |
| | TD unevenness of porosity | | | % | 2 | 2 | 2 | 2 | 11 | 2 | 2 | 2 | 2 | 12 | |
| Evaluation of batteries | Evaluation of output properties | | | | o | Δ | o | o | × | o | o | Δ | Δ | × | |
| | Evaluation of safety | | | | × | × | × | × | o | × | × | × | × | Δ | |

In Examples that satisfy requirements of the present invention, air permeation resistance is low, porosity is low, and shrinkage properties in the width direction are excellent to satisfy both safety and output properties, and thus they can be suitably used as separators for electricity storage devices. On the other hand, in Comparative Examples, low air permeation resistance and low porosity cannot sufficiently be satisfied simultaneously, or heat shrinkage properties are low, and thus they are difficult to use as separators for high output electricity storage devices.

Industrial Applicability

A porous propylene film of the present invention is safe and has excellent air permeability, and thus it can preferably be used as a separator for electricity storage devices.

**Claims**

1.  A porous polypropylene film comprising:

    a polypropylene resin; and
    a β-crystal nucleating agent,
    wherein a temperature at which a heat shrinkage rate of a dimension in a width direction of the film is 5% is 130 to 200 °C,
    air permeation resistance is 50 to 500 sec/100 ml,
    porosity is 35 to 70%, and
    when porosity is ε and air permeation resistance is G, a relation of the both satisfies the following expression (1) :

$$G+15\times\varepsilon \le 1,200 \qquad\qquad (1).$$

2.  The porous polypropylene film according to claim 1, wherein a temperature at which a heat shrinkage rate of a dimension in a longitudinal direction is 5% is 140 to 200 °C.

3.  The porous polypropylene film according to claim 1 or 2, wherein unevenness of thickness in a width direction is 20% or less to an average thickness value, and
    unevenness of porosity in a width direction is 10% or less to an average porosity value.

4.  The porous polypropylene film according to any one of claims 1 to 3, wherein a rate of hole area on a surface is 50% or more.

5.  The porous polypropylene film according to any one of claims 1 to 4, wherein β-crystal forming ability is 60% or more.

6.  A separator for an electricity storage devices comprising the porous polypropylene film according to any one of claims 1 to 5.

7.  An electricity storage device comprising the separator for an electricity storage device according to claim 6.

## INTERNATIONAL SEARCH REPORT

| International application No. |
| --- |
| PCT/JP2012/052428 |

**A. CLASSIFICATION OF SUBJECT MATTER**
*C08J9/00*(2006.01)i, *H01M2/16*(2006.01)i

According to International Patent Classification (IPC) or to both national classification and IPC

**B. FIELDS SEARCHED**

Minimum documentation searched (classification system followed by classification symbols)
C08J9/00, H01M2/16

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2008-248231 A  (Toray Industries, Inc.),<br>16 October 2008 (16.10.2008),<br>claims; paragraphs [0010] to [0015], [0026] to [0027], [0036]; example 2; table 1<br>(Family: none) | 1,2,4-7<br>3 |
| Y | JP 2010-242060 A  (Toray Industries, Inc.),<br>28 October 2010 (28.10.2010),<br>claims; paragraph [0013]<br>(Family: none) | 3 |
| A | JP 2009-043485 A  (Mitsubishi Plastics, Inc.),<br>26 February 2009 (26.02.2009),<br>example 3; table 2<br>(Family: none) | 1 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    11 April, 2012 (11.04.12) | Date of mailing of the international search report<br>    24 April, 2012 (24.04.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

| INTERNATIONAL SEARCH REPORT | International application No. |
|---|---|
| | PCT/JP2012/052428 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-190507 A  (Nitto Denko Corp.),<br>20 July 2006 (20.07.2006),<br>examples 1, 2; table 1<br>(Family: none) | 1 |
| A | WO 2010/107023 A1  (Toray Industries, Inc.),<br>23 September 2010 (23.09.2010),<br>claims<br>(Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55131028 A
- JP 55032531 A
- JP 63199742 A
- JP 6100720 A
- JP 9255804 A
- JP 5310665 A